Europäisches Patentamt

European Patent Office (11) Numéro de publication: **0 114 433**

Office européen des brevets **B1**

(12) **FASCICULE DE BREVET EUROPEEN**

(45) Date de publication du fascicule du brevet: **18.05.88**

(21) Numéro de dépôt: **83201781.8**

(22) Date de dépôt: **15.12.83**

(51) Int. Cl.⁴: **H 04 Q 3/54**

(54) **Système de commutation téléphonique.**

(30) Priorité: **22.12.82 FR 8221566**

(43) Date de publication de la demande:
**01.08.84 Bulletin 84/31**

(45) Mention de la délivrance du brevet:
**18.05.88 Bulletin 88/20**

(84) Etats contractants désignés:
**BE DE FR GB IT NL SE**

(56) Documents cités:
**FR-A-2 028 517**
**US-A-3 731 002**

**COLLOQUE INTERNATIONAL DE
COMMUTATION, 7-11 mai 1979, Paris (FR), M.
AKIYAMA et al.: "Selection d'intinéraire et
signalisation entre les unités de commande
dans un système de commutation du type "à
partage de charge"", pages 619-626**

**COLLOQUE INTERNATIONAL DE
COMMUTATION, 21-25 septembre 1981,
Montreal (CA), Y. NISHIZAWA et al.: "Le
système de commutation numérique KB 270",
session 32B papier 3, pages 1-8**

(73) Titulaire: **TELECOMMUNICATIONS
RADIOELECTRIQUES ET TELEPHONIQUES
T.R.T.
88, rue Brillat Savarin
F-75013 Paris (FR)**

(72) Inventeur: **Beierle, John David
Societe Civile S.P.I.D. 209 rue de l'Université
F-75007 Paris (FR)**

(74) Mandataire: **Chaffraix, Jean et al
Société Civile S.P.I.D. 209, rue de l'Université
F-75007 Paris (FR)**

(56) Documents cités:
**COLLOQUE INTERNATIONAL DE
COMMUTATION, 21-25 septembre 1981,
Montreal (CA), H. MORI et al.: "Conception et
architecture de centraux numériques de transit
de grande capacité, à commande par
microprocesseurs", session 24 A papier 3,
pages 1-7**

**COLLOQUE INTERNATIONAL DE
COMMUTATION; 21-25 septembre 1981;
Montreal (CA), S. HATTORI et al.: "Des EPBX
pour les futurs systèmes bureautiques
intégrés", session 33 C papier 3, pages 1-7**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

0 114 433

**Description**

La présente invention concerne un système de commutation téléphonique comportant, entre autres, des moyens de commutation destinés à commuter des informations de message en interconnectant des circuits d'accès pour des abonnés demandeurs et appelés auxquels sont affectés des organes de logique programmés dits organes d'accès, des moyens de commande de commutation pour commander en fonction d'informations de commande les commutations à effectuer par les moyens de commutation, au moins un circuit de liaison en boucle pour transmettre différentes informations de gestion auxdits organes d'accès et auxdits moyens de commande de commutation.

De tels systèmes sont décrits notamment:

— dans un premier document intitulé "Sélection d'itinéraire et signalisation entre les unités de commande dans un système de commutation du type à partage de charge" de Minoru AKIYAMA et Hisashi KASAHARA (pages 619 à 626), communication faite au Colloque International de Commutation tenu du 7 au 11 mai 1979 à Paris,

— et dans un deuxième document divulgué, intitulé "Système de commutation numérique KB270" de Kiyotaka KAMEDA et al, communication faite au Colloque International de Commutation tenu à Montréal en septembre 1981, Session 32B, papier 3, pages 1 à 8.

Dans le premier document, les moyens de commutation sont constitués par une pluralité de réseaux de commutation élémentaires. Pour effectuer une connexion entre, par exemple, un abonné demandeur et un abonné appelé, on utilise une procédure ancienne connue sous le nom de Strowger, c'est-à-dire une méthode pas à pas. On cherche tout d'abord dans un premier réseau, un chemin libre vers un deuxième réseau puis vers un troisième réseau. L'inconvénient majeur de cette procédure est qu'il y a des risques assez élevés d'aboutir à un blocage. Un autre inconvénient est que pour établir le chemin entre abonné demandeur et abonné appelé, les boucles sont trop sollicitées et de ce fait très souvent occupées à transmettre des informations de gestion. Le risque qu'elles ne soient pas disponibles devient élevé.

Le système connu du deuxième document comporte un sous-système de commande centrale qui gère toute information de gestion transmise sur un seul circuit de liaison en boucle. Tout le bon fonctionnement de ce système repose sur ce sous-système de commande de sorte qu'il a fallu prendre des précautions pour pallier aux défaillances de ce dernier.

Ainsi, ce sous-système est formé de deux processeurs centraux dont un seul assure le fonctionnement et dont l'autre peut secourir le premier. On conçoit alors que se pose le problème du passage d'un processeur central à l'autre en cas de défaillance.

La présente invention propose un système de commutation téléphonique, cité dans le préambule, avec lequel on n'est pas confronté à ces genres de problèmes et qui ne présente pas les inconvénients des systèmes connus des premier et deuxième documents précités.

Pour cela, un système de commutation téléphonique du genre mentionné ci-dessus est remarquable en ce que les moyens de commutation sont constitués par un réseau de commutation et les moyens de commande de commutation par un circuit marqueur dudit réseau, tandis que les informations de commande sont élaborées à partir d'un premier échange d'informations de gestion par l'intermédiaire d'un premier circuit de liaison en boucle entre un circuit traducteur d'abonné et de circuits rattaché à ce premier circuit de liaison et l'organe d'accès affecté au circuit d'accès d'un abonné demandeur et d'un deuxième échange d'informations de gestion par l'intermédiaire d'un deuxième circuit de liaison en boucle entre un circuit traducteur d'abonnés et de circuits rattaché au deuxième circuit de liaison en boucle et l'organe d'accès d'un abonné appelé.

Il convient de noter qu'il est connu des demandes de brevet français 2 420 262, 2 420 263 et 2 420 264 d'utiliser un réseau de commutation pour relier entre eux des abonnés à partir des informations provenant d'organes de logique programmée; cependant, le réseau de commutation est utilisé non seulement pour transmettre des informations de message entre abonnés mais aussi pour transmettre les informations de gestion. Ce dernier système est considéré comme désavantageux par rapport aux systèmes comportant au moins un circuit de liaison en boucle pour la transmission d'informations de gestion puisque le réseau de commutation subit une surcharge de trafic et que, de ce fait, l'établissement des appels prend trop de temps.

D'une manière avantageuse, selon un aspect de l'invention les circuits de liaison en boucle sont du type décrit dans le brevet français 2 217 876 ainsi que dans l'article de J. R. PIERCE intitulé "Network for Block Switching of Data" paru dans le revue BELL SYSTEM TECHNICAL JOURNAL de Juillet-Août 1972.

La description suivante faite en regard des dessins annexés, le tout donné à titre d'exemple non limitatif, fera bien comprendre comment l'invention peut être réalisée.

La figure 1 représente un système de commutation conforme à l'invention.

La figure 2 représente l'organisation des boucles.

La figure 3 montre un détail de réalisation du système représenté à la figure 1.

La figure 4 montre l'organisation des trames transmises dans les boucles.

La figure 5 montre le mode de réalisation d'une boîte de type A.

La figure 6 montre un organigramme représentant le fonctionnement de la boîte montrée à la figure 5.

La figure 7 montre le mode de réalisation d'une boîte de type B.

La figure 8 montre un organigramme représentant le fonctionnement de la boîte montrée à la figure 7.

2

La figure 9 montre le mode de réalisation d'une boîte de type C.

La figure 10 montre une variante de réalisation d'un système de télécommunication conforme à l'invention.

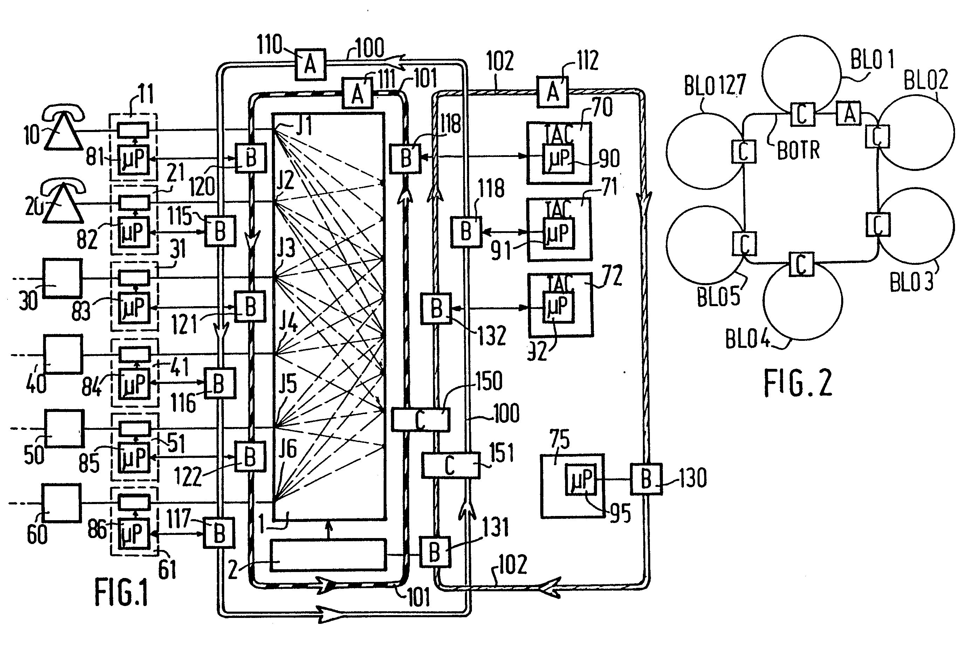

La figure 1 représente un système de commutation conforme à l'invention. La référence 1 indique un réseau de commutation qui est capable de commuter dans le temps et dans l'espace les données présentes à ces accès J1, J2, J3, . . ., J6. Ces commutations sont effectuées sous la dépendance d'un circuit marqueur 2. A l'accès J1 est connecté un premier circuit de groupement d'abonnés 10, par l'intermédiaire d'un circuit d'accès 11 et, à l'accès J2, un deuxième circuit de groupement d'abonnés 20, par l'intermédiaire d'un circuit d'accès 21. Un premier circuit de groupement de circuits interurbains 30 est relié, par l'intermédiaire d'un circuit d'accès 31, à l'accès J3 et un deuxième circuit de groupement de circuits interurbains 40 est relié à l'accès J4. Un premier circuit de groupement de circuits de services 50 est relié à l'accès J5, par l'intermédiaire d'un circuit d'accès 51 et un deuxième circuit de groupement de circuits de services 60 est relié à l'accès J6, par l'intermédiaire d'un circuit d'accès 61. Le système comporte aussi deux traducteurs d'abonnés et de circuits 70 et 71 et un traducteur de faisceaux, d'acheminement et de tarification portant la référence 72, ainsi qu'un centre d'exploitation et de maintenance 75. Les différents circuits d'accès 11, 21, 31, 41, 51, 61, comportent respectivement un organe de logique programmée 81, 82, 83, 84, 85 et 86. De même, les traducteurs 70, 71, 72 et le centre 75 comportent des organes de logique programmée 90, 91, 92, 95 respectivement. Pour faire fonctionner ce système, il importe de prévoir des circuits de liaison pour permettre l'échange d'informations de gestion entre les différents organes de logique programmée.

Conformément à l'invention, ces circuits de liaison sont constitués par des bouclés de Pierce 100, 101, 102, dans l'une desquelles (la boucle 102) est inséré le circuit de marquage 2 du réseau 1. Les boucles de Pierce sont formées de trois sortes d'éléments: les boîtes A, B et C.

Les informations de gestion transmises par ces boucles se présentent sous la forme de blocs d'informations.

Les boîtes A sont destinées à la synchronisation et l'engendrement des espaces de temps pour ces blocs. Un seule boîte A est nécessaire par boucle; la boucle 100 est munie d'une boîte A 110, la boucle 101 d'une boîte 111 et la boucle 102 d'une boîte 112.

Les boîtes B permettent l'insertion et l'extraction de blocs dans les boucles, la boucle 100 comportant les boîtes B 115, 116, 117, 118 qui permettent la raccordement avec respectivement les organes de logique programmée 82, 84, 86 et 91; les boîtes B 118, 120, 121, 122 de la boucle 101 permettent respectivement la raccordement des organes 90, 83, 85 et 81, tandis que les boîtes B 130, 131, 132, de la boucle 102 permettent respectivement le raccordement de l'organe 95, du circuit de marquage 2 et de l'organe 92.

Les boîtes C ont des fonctions d'aiguillage; ainsi, la boîte C 150 permet, pour certains blocs, de passer de la boucle 101 à la boucle 102 et inversement, tandis que la boîte 151 interconnecte les boucles 100 et 102.

Selon l'une des caractéristiques de l'invention, les boucles sont dites en réseaux hiérarchiques, c'est-à-dire que l'on distingue deux sortes de boucles: les boucles locales et les boucles de transit. Un système de commutation téléphonique conforme à l'invention comportera une seule boucle de transit et une multitude de boucles locales. La figure 2 montre une boucle de transit BOTR avec, par exemple, 127 boucles locales BLO1, BLO2, BLO3, BLO4, BLO5, . . ., BLO127; toutes ces boucles sont rattachées à la boucle de transit BOTR par une boîte C. En se reportant au système représenté à la figure 1, la boucle de transit porte la référence 102 et les boucles locales les références 100 et 101.

Chaque boucle locale a son traducteur d'abonnés et de services. Le traducteur 70 est rattaché à la boucle 101 et le traducteur 71 à la boucle 100. Le traducteur de faisceaux et d'acheminement portant la référence 72 et le centre d'exploitation et de maintenance portant la référence 75 sont rattachés à la boucle de transit 112.

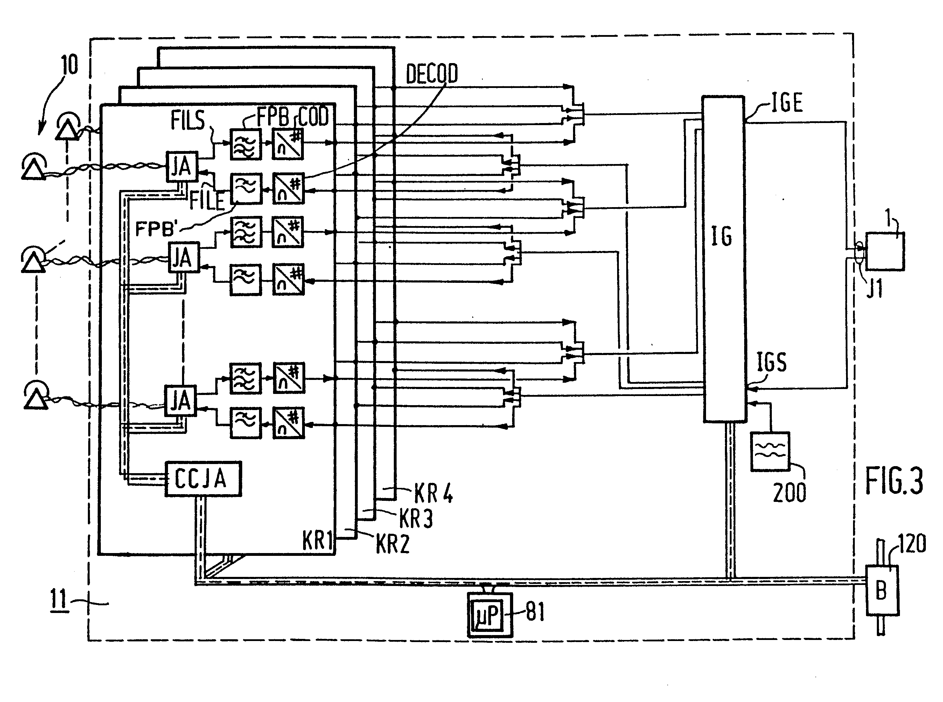

On a représenté en détail, à la figure 3, la structure du circuit de groupement d'abonnés 10 et du circuit d'accès 11. Le circuit 10 est, en fait, un ensemble de trente postes d'abonnés qui sont reliés au circuit 11. Ce circuit 11 se compose d'un ensemble de quatre cartes KR1, KR2, KR3 et KR4. Les cartes KR1, KR2 sont rattachées à huit abonnés, quant aux cartes KR3 et KR4, elles sont rattachées à sept, ce qui laisse deux places de secours. Chaque abonné est connecté à un joncteur d'abonné JA d'un type décrit à la conférence "NATIONAL TELECOMMUNICATION CONFERENCE", tenue du 30 Novembre au 4 Décembre 1982 au "SHAMROCK HILTON HOTEL" de HOUSTON (TEXAS); on se reportera aux pages 56.2.1 aux 56.2.5. Les différentes fonctions des circuits sont commandées par l'organe de logique programmée 81. Différents contrôles de ces joncteurs peuvent être effectués par un circuit de contrôle CCJA, comme cela est bien connu dans la technique (voir l'article de L'ONDE ELECTRIQUE de Novembre 1982 intitulé "Joncteurs d'abonné intégrés de G. FERRIEU et autres). Un fil FILS qui sort du joncteur d'abonné transmet les signaux de conversation provenant de l'abonné, tandis qu'un autre fil FILE transmet la conversation pour l'abonne. Le fil FILS est connecté à l'entrée d'un filtre passe-bande FPB dont la sortie est connectée à l'entrée d'un codeur analogique-numérique COD; la sortie du codeur COD est reliée à une entrée de l'interface de groupe IG; l'information sortant à la sortie IGE représente un multiplex temporel pouvant contenir toutes les informations de parole des trente abonnés. L'accès J1 du réseau 1 accepte ces informations et fournit aussi des informations sous forme multiplexée dans le temps à l'entrée IGS de l'interface IG qui les attribue aux différents abonnés. Les informations pour un abonné se présentent sous forme numérique sont transformées en analogique par le convertisseur numérique-analogique DECOD; le signal de sortie de ce

3

décodeur est filtré par un filtre passe-bas FPB' avant d'être transmis sur le fil FILE connecté au joncteur JA. La référence 200 indique un générateur de tonalités (invitation à numéroter, retour de sonnerie, occupé, ...) qui est connecté à l'interface IG pour que ces tonalité codées sous forme numérique soient injectées dans l'intervalle de temps du multiplex affecté à l'abonné concerné. Pour la description d'un tel INTERFACE, on pourra se reporter à l'article: "DESIGN OF A DIGITAL EXCHANGE" de J. M. COTTON et D. A. LAWSON, paru dans le volume 3, n° 1, de Février 1980, de la revue COMPUTER COMMUNICATIONS.

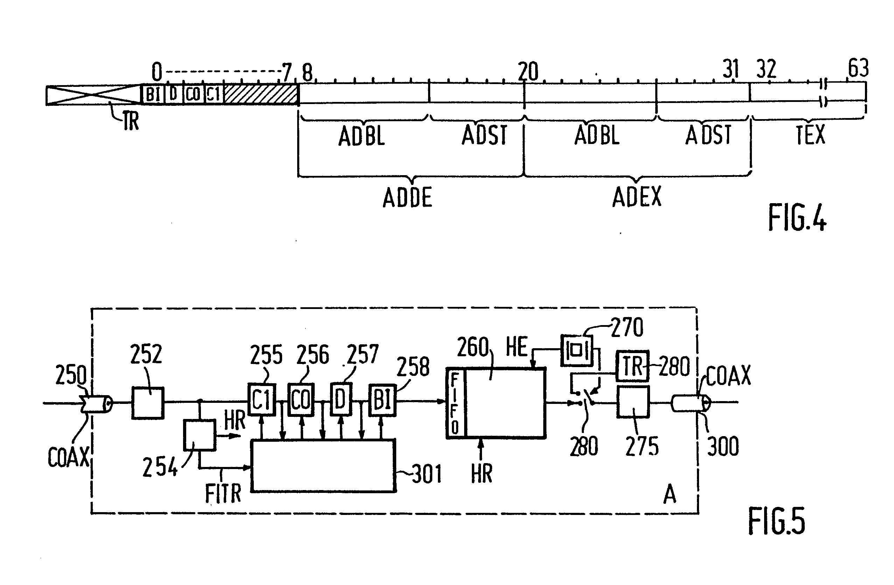

On se propose maintenant de montrer comment l'invention permet d'établir une communication entre deux abonnés au moyen de blocs d'informations de gestion circulant dans les boucles 100, 101 et 102. La figure 4 montre la structure des blocs. En avant d'un bloc est disposé un code de trame TR. Les huit premiers éléments binaires qui suivent forment un octet de contrôle; parmi les éléments binaires de cet octet, on ne donnera la signification que des quatre premiers, à savoir:

— l'élément binaire 0 ou BI indique si la trame est libre ou occupée.
— l'élément binaire 1 ou D indique un drapeau.
— et les éléments binaires 2 et 3 ou C0 et C1 forment un compteur.

L'utilité de ces éléments binaires sera mieux comprise dans la suite du présent exposé.

Après cet octet de contrôle, douze éléments binaires sont affectés au destinataire et forment le mot ADDE, et les douze suivants à l'expéditeur pour former le mot ADEX. Le mot ADEX définit l'adresse de la boîte B à partir de laquelle est lancé le bloc et le mot ADDE définit l'adresse de la boîte B pour laquelle le bloc est destiné, le mot ADEX est formé de deux mots ADBL et ADST. ADBL définit l'adresse ou le numéro de la boucle à laquelle appartient la boîte B expéditrice et le mot ADST son adresse ou son numéro sur cette boucle. De la même manière, le mot ADDE est formé de deux mots ADBL et ADST qui ont la même signification que les précédents, mais concernent la boîte B destinataire. Les trente-deux éléments binaires TEX sont notamment utilisés pour des codes d'ordre de gestion. De plus, comme plusieurs abonnés (ou circuits) sont rattachés aux boîtes B, chacun de ces abonnés ou circuits se voit attribuer un code AT d'adresse supplémentaire qui peut être contenu, si besoin est, dans les trente-deux éléments binaires TEX. Dans l'exemple décrit:

le code ADBL est formé de sept éléments binaires
le code ADST est formé de cinq éléments binaires
le code AT est formé de cinq éléments binaires
Il convient de noter les codes suivants:
le code ADST pour les traducteurs TAC est     00000
le code ADBL pour la boucle de transit 102 est 0000000
le code ADST pour le circuit marqueur 2 est    00000.
Comme celui-ci est situé sur la boucle de transit, son adresse est:
000000000000.

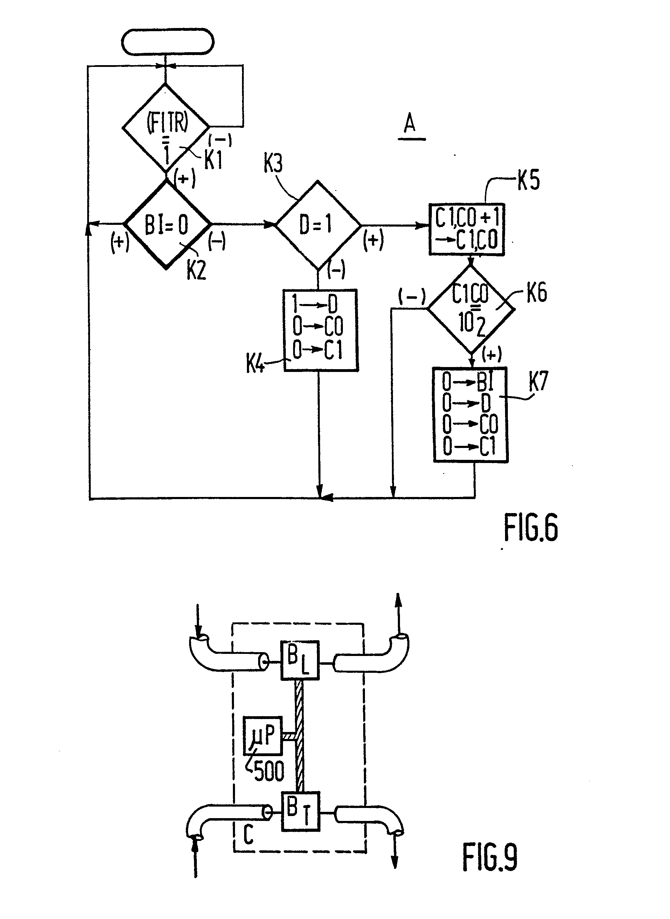

A la figure 5, on a représenté en détail le schéma d'une boîte A. Les informations véhiculées sur la boucle par l'intermédiaire d'un câble coaxial COAX arrivent à l'entrée 250 de la boîte A, un récepteur 252 amplifie les signaux reçus et les met en forme pour le traitement. Un circuit d'horloge 254 fournit différents signaux: notamment sur un fil FITR, il fournit un signal actif "1" dès que le code de trame est détecté et sur un fil HR des signaux d'horloge à la cadence d'apparition des éléments binaires pour que les éléments binaires C1, C0, D, BI soient contenus dans des bascules 255, 256, 257 et 258 montées en registre à décalage; l'entrée de ce registre est reliée à la sorte du récepteur 252 et la sortie est reliée à l'entrée d'un registre tampon variable 260 qui peut être réalisé à partir d'une mémoire connue sous le nom de mémoire FIFO. Cette mémoire est donc remplie au rythme du circuit d'horloge 254 et elle est vidée au rythme d'une horloge d'émission 270. La sortie de la mémoire FIFO est reliée à l'entrée d'un circuit émetteur 275, par l'intermédiaire d'un commutateur 280. Ce commutateur, commandé par l'horloge d'émission 270, permet l'injection du code de trame TR contenu dans un registre 280. La sortie de l'émetteur 275 constitue la sortie 300 de la boîte A. Un circuit logique 301 gère le fonctionnement de cette boîte A. Pour cela, il est relié au fil FITR et aux sorties de bascules 255, 256, 257, 258. De plus, il peut agir sur l'état de ces bascules. La figure 6 représente un organigramme du fonctionnement qui se compose de plusieurs cases. La case K1 représente un test pour savoir si le signal FITR est actif ou non. On ne passera à la case K2 que si ce signal devient actif; se le bloc est libre BI = 0, il n'y a aucune action à faire et l'on revient à la case K1; s'il est occupé, on passe à la case K3 où l'on teste le drapeau D; si celui-ci n'est pas égal à 1, on va à la case K4 où l'on met ce drapeau à 1 et l'on met à zéro les éléments binaires C0 et C1. Pour cela, on agit respectivement sur la mise à "1" et les mises à zéro des bascules 257, 256 et 255. Puis on revient à la case K1. Si le drapeau testé à la case K3 est égal à "1", on ajoute "1" au nombre binaire formé par les éléments binaires C1, C0 contenus dans les bascules 255 et 256. Puis, à la case K6, on teste si ce nombre binaire est égal à 3 ou "10" en base binaire; si c'est non, on retourne à la case K1, si c'est oui, on va à la case K7. A la case K7, les opérations indiquées consistent à agir sur la mise à zéro de toutes les bascules 255, 256, 257 et 258, de sorte que les éléments binaires BI, D, C0 et C1 deviennent égaux à "0". Ainsi, on obtient qu'un bloc occupé qui traverse trois fois la boîte A sera libéré.

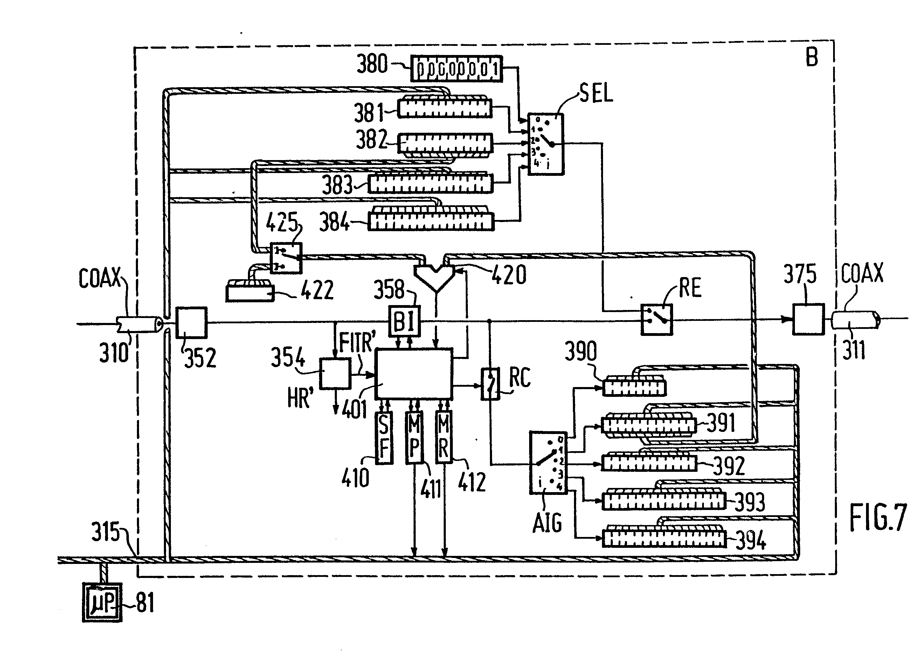

La figure 7 représente en détail le mode de réalisation des boîtes B, par exemple la boîte 120. Ces boîtes présentent une entrée 310 et une sortie 311 pour le raccordement du câble COAX constituant la boucle, ainsi qu'un accès 315 pour l'organe de logique programmée 81. Cet accès permet le passage des différents bus (bus d'adresses, de données, de commandes, ...) du microprocesseur faisant partie de

**0 114 433**

l'organe 81. Un récepteur 352 amplifie les signaux reçus et les met en forme pour le traitement. Un circuit d'horloge 354 connecté à la sortie du récepteur 352 fournit des signaux sur différents fils: notamment sur un fil FITR' où apparaît un signal actif "1" dès que le code de trame est détecté, et sur un fil HR', des signaux à la cadence d'apparition des éléments binaires. La sortie du récepteur 352 est aussi reliée à l'entrée d'une bascule 258 dont la sortie est reliée à l'entrée d'un émetteur 375, par l'intermédiaire d'un commutateur RE. La sortie de l'émetteur constitue la sortie 311 de la boîte B. Par l'intermédiaire de ce commutateur, on peut émettre sur la sortie 311 tout un bloc dont les données sont contenues dans des registres 380, 381, 382, 383 et 384. Le registre 380 contient l'octet de contrôle, le registre 381 le code ADDE, le registre 382 le code ADEX, les registres 383 et 384 l'ensemble de codes TEX. Ces registres sont chargés en parallèle par le microprocesseur 81 et peuvent être vidés en série au rythme des signaux d'horloge du circuit 354. Ce vidage en série s'effectue par l'intermédiaire d'un commutateur SEL coopérant avec la commutateur RE. On a prévu aussi un ensemble de registres 390, 391, 392, 393 et 394 pour enregistrer tout un bloc provenant du côté réception. Le registre 390 a une capacité suffisante pour contenir l'octet de contrôle, les registres 391, 392, 393 et 394 pour contenir respectivement le code ADDE, ADEX, une partie de TEX et l'autre partie de TEX. Le chargement de ces registres s'effectue par l'intermédiaire d'un commutateur AIG et d'un interrupteur RC connecté, dans la ligne reliant le récepteur à l'émetteur, à la sortie de la bascule 358. Le contenu des registres 390 à 394 est lu par l'ensemble 81. L'émission des blocs contenus dans les registres 380 à 384 et l'enregistrement des blocs dans les registres 390 à 394 sont commandés par un circuit logique 401 auquel sont rattachées, outre la bascuel 358, des bascules 410, 411 et 412. Ces bascules sont destinées à contenir les informations SF, MP et MR dont les significations sont les suivantes:

SF = 1 indique qu'un bloc a été émis

MP = 1 indique qu'un bloc doit être émis

MR = 1 indique qu'un bloc est enregistré dans les registres 390 à 394 et concerne l'organe 81.

On notera que les bascules 411 et 412 sont reliées à l'organe 81. Le circuit logique 401 utilise aussi le signal de sortie d'un comparateur de code 420 qui compare le contenu du registre 391, soit avec le contenu figé d'un registre 422 contenant le code ADDE propre à la boîte B en question, soit avec le contenu du registre 382. Ce choix est obtenu en agissant sur la position d'un commutateur 425.

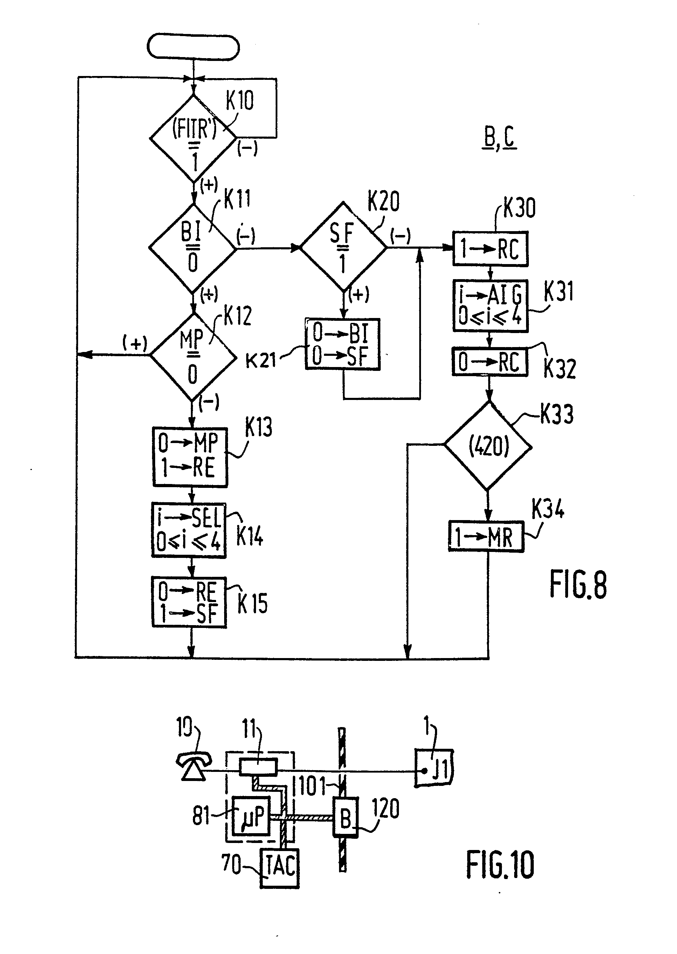

On explique maintenant le fonctionnement du circuit logique 401 à l'aide de l'organigramme de la figure 8.

La case K10 indique le test du fil FITR' pour savoir si le code de trame est détecté. Dès que celui-ci est détecté, on passe à la case K11 qui indique le test de la bascule 358; ce test détermine si le bloc reçu est occupé ou non. Si le bloc est libre (BI = 0), on passe à la case K12 où l'on teste la bascule 411, c'est-à-dire pour savoir si l'organe 81 a rempli les registres 380 à 384 en vue d'émettre un bloc; si c'est le cas, l'organe 81 a mis à "1" la bascule 411, donc MP ≠ 0 et l'on passe à la case K13. Si ce n'est pas le cas, MP = 0, on revient à la case K10. A la case K13, on remet à zéro la bascule 411, on active le commutateur RE Pour que l'entrée de l'émetteur soit connectée à la sortie du commutateur SEL; puis, (case K14) on agit sur les positions de ce commutateur SEL pour que les contenus des registres 380 à 384 soient émis dans la boucle. Cette émission terminée, on remet le commutateur RE dans sa position initiale, de sorte que l'entrée de l'émetteur 375 soit connectée à la sortie de la bascule 358, et l'on met à "1" la bascule 410 (case K15). On retourne ensuite à la case K10.

Si, à la case K11, on s'est aperçu que le bloc était occupé, on passe alors à la case K20 où l'on teste la bascule 410 pour savoir si le bloc est occupé par des informations émanant de cette propre boîte; si c'est le cas, SF = 1, on passe à la case K21 où l'on agit sur les bascules 358 et 410 pour les mettre à zéro, on libère ainsi le bloc et l'on va alors à la case K30. Si SF = 0, on va oeuvrer pour que le bloc entrant soit enregistré dans les registres 390 à 394. Pour cela, on met en position fermée l'interrupteur RC (case K30) et on commande les positions du commutateur AIG (case K31). Ces opérations terminées, on met en position ouverte l'interrupteur RC (case K32). A la case K33, on examine s'il y a identité entre le code ADDE contenu dans le registre 391 et le code ADEX contenu dans le registre 382. S'il y a identité, on met à "1" la bascule 412 (case K34), ce qui signifie que l'organe 81 doit venir lire le contenu des registres 390 à 394. S'il n'y a pas identité, on revient à la case K10.

La figure 9 montre la structure d'une boîte C. Elle est formée de deux boîtes B. On distingue une de ces boîtes par BL: c'est la boîte disposée dans une boucle locale et l'autre par BT: c'est la boîte disposée dans la boucle de transit; l'échange d'informations entre ces deux boucles est effectué par un organe de logique programmée 500. Il convient de noter qu'il faut considérer pour ces boîtes BL et BT l'autre position du commutateur 425. C'est-à-dire que l'organe 420 compare le contenu d'une partie du registre 391 (celle qui contient le code ADBL composant le code ADDE) avec celui du registre 422 qui contient l'adresse de la boucle locale tant pour la boîte BL que pour la boîte BT. Cependant, le test indiqué à la case K33 doit être interprété de la manière suivante:

a) Pour la boîte BL, on passe de la case K33 à la case K34, si le code ADBL de ADDE est différent du code de l'adresse de la boucle locale contenu dans le registre 422.

b) Pour la boîte BT, on passe de la case K33 à la case K34 si le contenu ADBL de ADDE est identique au code de l'adresse de la boucle locale contenu dans le registre 422.

On explique ci-dessous comment se déroule la procédure de mise en relation de deux abonnés AA et BB faisant partie de l'ensemble 10 et 20. L'abonné AA est supervisé par l'organe 81 et l'abonné BB par

5

l'organe 82. Cette procédure est expliquée à l'aide de l'annexe qui montre la structure des blocs circulant dans les différentes boucles 100, 101 et 102.

L'abonné AA décroche; ceci est signalé à l'organe 81 qui provoque l'émission, dans la boucle 101, du bloc montré à la ligne 1 de l'annexe. Ce bloc est une démarche de réservation pour l'abonné AA dont l'adresse supplémentaire est notée AT (AA). Ce message est envoyé à l'organe TAC 70 de la boucle 101, qui fera passer de l'état libre à l'état réservé l'abonné AA. A la ligne 2, l'organe 70 renvoie à la boîte B 120 la confirmation que l'abonné AA est réservé avec, en plus, la classe COS (AA) de cet abonné (la classe représente les fonctions qui lui sont attribuées: accès à l'interurbain, conférences, etc . . .).

Les trois premiers numéros DG1, DG2, DG3 que compose l'abonné AA sont ensuite envoyés à un traducteur, ligne 3; ces trois numéros vont déterminer l'adresse de la boucle qui dessert l'abonné BB, ligne 4. Puis, ligne 5, les quatre autres numéros DG4, DG5, DG6 et DG7 sont envoyés au traducteur de la boucle de l'abonné BB; dans cet exemple décrit, c'est le traducteur 71; celui-ci va renvoyer, ligne 5, à la boîte 120 toutes les informations concernant l'adresse de l'abonné BB signifiant par là que, d'ores et déjà, l'abonné BB est passé à l'état réservé, ligne 6.

Le bloc indiqué à la ligne 7 est la demande d'appel effectuée de la boîte 120 pour la boîte 115 desservant l'abonné BB. La boîte 115 signale, ligne 8, alors au traducteur 71 cette demande pour mettre l'abonné à l'état occupé. Le traducteur 71 transmet ce changement d'état au traducteur 70 pour mettre aussi l'abonné AA à l'état occupé, ligne 9. Le traducteur 70 transmet, ligne 10, à la boîte 10 un constat d'occupation des abonnés AA et BB. La boîte 120 envoie alors (ligne 11) vers le circuit marqueur 2 l'ordre de raccorder AA et BB. Ce raccord effectué, le marqueur donne, ligne 12, à la boîte 115 l'ordre de sonner l'abonné BB. Puis la boîte 115 envoie, ligne 13, à la boîte 120 l'ordre de faire retentir à l'abonné AA la tonalité de retour d'appel ou retour sonnerie. Lorsque l'abonné BB décroche, la boîte 115 envoie, ligne 14, cette information à la boîte 120 qui constate (ligne 15) ce fait; la communication est alors établie.

On examine le cas où la communication s'interrompt entre les abonnés AA et BB.

On suppose que l'abonné AA raccroche; ceci est détecté au niveau de la boîte 120 qui signale ceci, ligne 16, à la boîte 115. La boîte 115 donne, ligne 17, alors l'ordre au traducteur 71 de mettre l'abonné BB à l'état relâché; puis le traducteur 71 demande, ligne 18, au traducteur 70, de mettre l'abonné AA à l'état relâché. Le traducteur 70 transmet, ligne 19, à la boîte 120, le fait que les abonnés AA et BB sont à l'état relâché; c'est alors que la boîte 120 peut envoyer, ligne 20, au circuit marqueur 2, l'ordre de déconnecter les abonnés AA et BB. A la ligne 21, on indique que le circuit marqueur signale à la boîte 115 le fait que l'abonné BB est déconnecté (de l'abonné AA) et la boîte 115 envoie, ligne 22, à la boîte 120, l'information qu'il faut considérer que l'abonné AA est déconnecté. La boîte 120 demande, ligne 23, au traducteur 70, de mettre l'abonné AA à l'état libre. Le traducteur confirme ce fait, ligne 24. Par ailleurs, la boîte 115 demande, ligne 25, à son traducteur, de mettre l'abonné BB à l'état libre, ce qui lui est confirmé au retour, ligne 26.

Ainsi qu'on l'aura compris, chaque abonné peut avoir quatre états s'établissant de manière cyclique.

L'état libre, c'est-à-dire qu'il peut être appelé,

l'état réservé, c'est-à-dire qu'il est impliqué dans une communication, mais que celle-ci n'est pas encore établie,

l'état occupé, c'est-à-dire qu'il est en conversation,

l'état relâché: les abonnés ont cessé leur conversation, mais la connexion entre eux est toujours existante à l'intérieur du réseau 1.

La figure 10 montre une variante de réalisation d'un système de commutation conforme à l'invention. Selon cette variante, le circuit traducteur, par exemple le circuit 70, peut être rattaché à une boîte B, la boîte 120, un seul organe à logique programmée gérera alors le circuit 11 et ce traducteur 70.

# ANNEXE

| 1 | 1000 | //// | ADBL (AA) 00000 | | ADBL (AA) ADST (AA) | |
|---|------|------|------------------|---|---------------------|---|
| | réserver AA | AT(AA) | | | | |

| 2 | 1000 | //// | ADBL (AA) ADST (AA) | | ADBL (AA) 00000 | |
|---|------|------|---------------------|---|------------------|---|
| | AA réservé | AT(AA) | COS (AA) | | | |

| 3 | 1000 | //// | ADBL (AA) 00000 | | ADBL (AA) ADST (AA) | |
|---|------|------|------------------|---|---------------------|---|
| | traduction 8 chiffres | AT(AA) | DG1 | DG2 | DG3 | |

| 4 | 1000 | //// | ADBL (AA) ADST (AA) | | ADBL (AA) 00000 | |
|---|------|------|---------------------|---|------------------|---|
| | identité traducteur | AT(AA) | ADBL(BB) | | | |

| 5 | 1000 | //// | ADBL (BB) 00000 | | ADBL (AA) ADST (AA) | |
|---|------|------|------------------|---|---------------------|---|
| | traduction 4 chiffres | AT(AA) | DG4 | DG5 | DG6 | DG7 |

| 6 | 1000 | //// | ADBL (AA) ADST (AA) | | ADBL (BB) 00000 | |
|---|------|------|---------------------|---|------------------|---|
| | BB réservé | AT(AA) | AT(BB) | ADST(BB) | | |

| 7 | 1000 | //// | ADBL (BB) ADST (BB) | | ADBL (AA) ADST (AA) | |
|---|------|------|---------------------|---|---------------------|---|
| | demande d'appel | AT(AA) | AT(BB) | | | |

| 8 | 1000 | //// | ADBL (BB) 00000 | | ADBL (BB) ADST (BB) | |
|---|------|------|------------------|---|---------------------|---|
| | BB occupé | AT(BB) | ADBL (AA) | ADST (AA) | AT (AA) | |

| 9 | 1000 | //// | ADBL (AA) 00000 | | ADBL (BB) 00000 | |
|---|------|------|------------------|---|------------------|---|
| | AA occupé | ADST (BB) | AT(BB) | ADST(AA) | AT (AA) | |

| 10 | 1000 | //// | ADBL (AA) ADST (AA) | | ADBL (AA) 00000 | |
|----|------|------|---------------------|---|------------------|---|
| | constatation AA, BB occupés | AT(AA) | ADBL (BB) | ADST(BB) | AT(BB) | |

| 11 | 1000 | //// | 0000000 00001 | | ADBL (AA) ADST (AA) | |
|----|------|------|----------------|---|---------------------|---|
| | raccordement AA et BB | AT(AA) | ADBL(BB) | ADST(BB) | AT(BB) | |

| 12 | 1000 | //// | ADBL (BB) ADST (BB) | | 0000000 00001 | |
|----|------|------|---------------------|---|----------------|---|
| | sonner BB | AT(BB) | ADBL (AA) | ADST (AA) | AT (AA) | |

7

| 13 | 1 0 0 0 | ///// | ADBL(AA) ADST(AA) | ADBL(BB) ADST(BB) |
| | retour sonnerie pour AA | AT(BB) | AT(AA) | |

| 14 | 1 0 0 0 | ///// | ADBL(AA) ADST(AA) | ADBL(BB) ADST(BB) |
| | BB a décroché | AT(BB) | AT(AA) | |

| 15 | 1 0 0 0 | ///// | ADBL(BB) ADST(BB) | ADBL(AA) ADST(AA) |
| | constatation décroché | AT(AA) | AT(BB) | |

| 16 | 1 0 0 0 | ///// | ADBL(BB) ADST(BB) | ADBL(AA) ADST(AA) |
| | AA veut relacher | AT(AA) | AT(BB) | |

| 17 | 1 0 0 0 | ///// | ADBL(BB) 0 0 0 0 0 | ADBL(BB) ADST(BB) |
| | mettre BB en état relaché | AT(BB) | ADBL(AA) | ADST(AA) | AT(AA) |

| 18 | 1 0 0 0 | ///// | ADBL(AA) 0 0 0 0 0 | ADBL(BB) 0 0 0 0 0 |
| | mettre AA en état relaché | ADST(BB) | AT(BB) | ADST(AA) | AT(AA) |

| 19 | 1 0 0 0 | ///// | ADBL(AA) ADST(AA) | ADBL(AA) 0 0 0 0 0 |
| | constatation AA,BB relachés | AT(AA) | ADBL(BB) | ADST(BB) | AT(BB) |

| 20 | 1 0 0 0 | ///// | 0000000 00001 | ADBL(AA) ADST(AA) |
| | déconnecter AA, BB | AT(AA) | ADBL(BB) | ADST(BB) | AT(BB) |

| 21 | 1 0 0 0 | ///// | ADBL(BB) ADST(BB) | 0000000 00001 |
| | BB déconnecté | AT(BB) | ADBL(AA) | ADST(AA) | AT(AA) |

| 22 | 1 0 0 0 | ///// | ADBL(AA) ADST(AA) | ADBL(BB) ADST(BB) |
| | AA déconnecté | AT(BB) | AT(AA) | |

| 23 | 1 0 0 0 | ///// | ADBL(AA) 0 0 0 0 0 | ADBL(AA) ADST(AA) |
| | état libre ? | AT(AA) | | |

| 24 | 1 0 0 0 | ///// | ADBL(AA) ADST(AA) | ADBL(AA) 0 0 0 0 0 |
| | AA libre | AT(AA) | | |

| 25 | 1 0 0 0 | ///// | ADBL(BB) 0 0 0 0 0 | ADBL(BB) ADST(BB) |
| | état libre? | AT(BB) | | |

| 1000 | ///// | ADBL(BB)   ADST(BB) | ADBL (BB) | 00000 |
|------|-------|---------------------|-----------|-------|
| BB libre | AT(BB) | | | |

## Revendications

1. Système de commutation téléphonique comportant, entre autres, des moyens de commutation destinés à commuter des informations de message en interconnectant des circuits d'accès pour des abonnés demandeurs et appelés auxquels sont affectés des organes de logique programmés dits organes d'accès, des moyens de commande de commutation pour commander en fonction d'informations de commande les commutations à effectuer par les moyens de commutation, au moins un circuit de liaison en boucle pour transmettre différentes informations de gestion auxdits organes d'accès et auxdits moyens de commande de commutation, caractérisé en ce que les moyens de commutation sont constitués par un réseau de commutation et les moyens de commande de commutation par un circuit marqueur dudit réseau, tandis que les informations de commande sont élaborées à partir d'un premier échange d'informations de gestion par l'intermédiaire d'un premier circuit de liaison en boucle entre un circuit traducteur d'abonnés et de circuits rattaché à ce premier circuit de liaison et l'organe d'accès affecté au circuit d'accès d'un abonné demandeur et d'un deuxième échange d'informations de gestion par l'intermédiaire d'un deuxième circuit de liaison en boucle entre un circuit traducteur d'abonnés et de circuits rattaché au deuxième circuit de liaison en boucle et l'organe d'accès d'un abonné appelé.

2. Système de commutation téléphonique, selon la revendication 1, caractérisé en ce que le premier et le deuxième circuit de liaison en boucle sont confondus.

3. Système de commutation téléphonique, selon la revendication 2, caractérisé en ce que les circuits de liaison en boucle sont organisés pour avoir des circuits en boucle locaux réunis par un circuit de liaison en boucle de transit, le circuit de commande de commutation étant un circuit marqueur inséré dans le circuit de liaison en boucle de transit tandis qu'un circuit traducteur d'abonnés et de circuits est inséré dans chacun des circuits de liaison en boucle locaux.

4. Système de commutation téléphonique, selon la revendication 3, caractérisé en ce qu'un traducteur de faisceaux, d'acheminement et de tarification est inséré dans la boucle de transit.

5. Système de commutation téléphonique, selon la revendication 3, caractérisé en ce que le circuit traducteur d'abonnés et de circuits fait partie d'un circuit d'accès commandé par le même organe de logique programmée.

6. Système de commutation téléphonique, selon l'une des revendications 1 à 5, caractérisé en ce que les informations de gestion sont constituées par des blocs comportant des éléments binaires de contrôle, un code d'adresse destinataire, un code d'adresse expéditeur, un code d'ordre et des codes plus particuliers.

7. Système de commutation téléphonique selon l'une des revendications 1 à 6, pour lequel les boucles comportent des boîtes de type A pour la synchronisation et l'engendrement des espaces de temps pour des blocs d'informations de gestion, des boîtes de type B pour l'insertion et l'extraction de flocs dans la boucle et des boîtes de type C pour des fonctions d'aiguillage entre deux boucles, caractérisé en ce que la boîte de type A comporte des moyens pour libérer un bloc qui a traversé "n" fois la boîte A en étant occupé.

8. Système de commutation téléphonique selon l'une des revendications 1 à 6 pour lequel les boucles comportent des boîtes de type A pour la synchronisation et l'engendrement des espaces de temps pour des blocs d'informations de gestion, des boîtes de type B pour l'insertion et l'extraction de blocs dans la boucle et des boîtes de type C pour des fonctions d'aiguillage entre deux boucles, caractérisé en ce que la boîte de type B comporte des registres de réception pour enregistrer un bloc reçu et des registres d'émission pour contenir un bloc à émettre et un ensemble logique pour signaler à l'organe de logique programmée auquel la boîte B est rattachée que le bloc reçu lui est destiné et pour émettre dans un bloc libre le bloc contenu dans le registre d'émission chargé par ledit organe de logique programmée.

9. Système de commutation téléphonique selon l'une des revendications 1 à 6 pour lequel les boucles comportent des boîtes de type A pour la synchronisation et l'engendrement des espaces de temps pour des blocs d'informations de gestion, des boîtes de type B pour l'insertion et l'extraction de blocs dans la boucle et des boîtes de type C pour des fonctions d'aiguillage entre deux boucles, caractérisé en ce que la boîte de type C est formée par deux boîtes de type A dont les registres d'émission et de réception sont couplés par l'intermédiaire d'un organe de logique programmée.

## Patentansprüche

1. Fernsprechvermittlungssystem mit u.a. Schaltelementen, die zum Durchschalten von Nachrichteninformationen dienen und zwar dadurch, dass Eingangskreise für anrufende und angerufene Teilnehmer miteinander verbunden werden, wozu programmierte logische Elemente, sog. Zugriffelemente, bestimmt

9

sind, weiterhin Schaltsteuerelementen zum abhängig von Steuerdaten Steuern der von den Schaltelementen durchzuführenden Schaltungen, mindestens einem Verbindungskreis in Form einer Schleife zum Übertragen von jeweiligen Verwaltungsdaten zu den Zugriffelementen und den Schaltsteuerelementen, dadurch gekennzeichnet, dass die Schaltelemente aus einem Schaltnetzwerk und die Schaltsteuerelemente aus einem Markierungskreis des Netzwerkes bestehen, während die Steuerdaten ausgehend von einem ersten Austausch von Steuerdaten mit Hilfe eines ersten Verbindungskreises in Form einer Schleife zwischen einem Teilnehmerübersetzerkreis und Kreisen, die an den ersten Verbindungskreis angeschlossen sind und dem Zugriffelement für den Eingangskreis eines angerufenen Teilnehmers ausgearbeitet werden und ausgehend von einem zweiten Austausch von Steuerdaten mit Hilfe eines zweiten Verbindungskreises in Form einer Schleife zwischen einem Teilnehmerübersetzerkreis und an den zweiten Verbindungskreis in Form einer Schleife und das Zugriffselement eines angerufenen Teilnehmers angeschlossen Kreisen.

2. Fernsprechvermittlungssystem nach Anspruch 1, dadurch gekennzeichnet, dass der erste und der zweite Verbindungskreis in Form einer Schleife ein Ganzes bilden.

3. Fernsprechvermittlungssystem nach Anspruch 2, dadurch gekennzeichnet, dass die Verbindungskreise in Form einer Schleife dazu eingerichtet sind, Kreise in Form einer Ortsschleife zu haben, die durch einen Verbindungskreis in Form einer Durchgangsschleife vereint sind, wobei der Schaltsteuerkreis ein Markierungskreis ist, der in den Verbindungskreis in Form einer Durchgangsschleife eingefügt worden ist, während ein Übersetzerkreis für Teilnehmer und Kreise in jeden der Verbindungskreise in Form von Ortsschleifen eingefügt worden ist.

4. Fernsprechvermittlungssystem nach Anspruch 3, dadurch gekennzeichnet, dass in die Durchgangsschleife ein Bündel-, Leitweg- und Kostenberechnungsübersetzer aufgenommen ist.

5. Fernsprechvermittlungssystem nach Anspruch 3, dadurch gekennzeichnet, dass der Teilnehmer- und Kreisübersetzer einen Teil eines Eingangskreises bildet, der von demselben programmierten logischen Element gesteuert wird.

6. Fernsprechvermittlungssystem nach einem der Ansprüche 1 bis 5, dadurch gekennzeichnet, dass die Verwaltungsdaten aus Blöcken bestehen, die binäre Steuerelemente, einen Bistimmungsadressenkode, einen Versandadressenkode, einen Auftragskode und Spezialkodes aufweisen.

7. Fernsprechvermittlungssystem nach einem der Ansprüche 1 bis 6, wobei die Schleifen Bauelemente vom Typ A aufweisen und zwar zum Synchronisieren und Erzeugen von Zeiträumen für Verwaltungsdatenblöcke, Bauelemente vom Typ B zum Einfügen in und zum Herausnehmen aus der Schleife von Blöcken sowie Bauelemente vom Typ C für Anschlusszwecke zwischen zwei Schleifen, dadurch gekennzeichnet, dass das Bauelement von Type A mit Elementen versehen ist zum Freimachen eines Blockes, der "n"-mal durch das Bauelement vom Typ A hindurchgegangen ist, das dadurch gelegt ist.

8. Fernsprechvermittlungssystem nach einem der Ansprüche 1 bis 6, wobei die Shleifen Bauelemente vom Typ A aufweisen und zwar zum Synchronisieren und Erzeugen von Zeiträumen für Verwaltungsdatenblöcke, Bauelemente vom Typ B zum Einfügen in und zum Herausnehmen aus der Schleife von Blöcken sowie Bauelemente vom Typ C für Anschlusszwecke zwischen zwei Schleifen, dadurch gekennzeichnet, dass das Bauelement vom Typ B Empfangsregister aufweist zum Festlegen eines empfangenen Blocks und Senderegister zum Aufbewähren eines auszusendenen Blocks und ein logisches Gefüge um dem programmierten logischen Element, an das das B-Bauelement angeschlossen ist, mitzuteilen, dass der empfangene Block für ihn bestimmt ist und um in einem freien Block den Block auszusenden, der in dem Senderegister vorhanden ist, das von dem programmierten logsichen Element gefüllt ist.

9. Fernsprechvermittlungssystem nach einem der Ansprüche 1 bis 6, wobei die Schleifen Bauelemente vom Typ A aufweisen und zwar zum Synchronisieren und Erzeugen von Zeiträumen für Bearbeitungsdatenblöcke, Bauelemente vom Typ B zum Einfügen in und zum Herausnehmen aus der Schleife von Blöcken sowie Bauelemente vom Typ C für Anschlusszwecke zwischen zwei Schleifen, dadurch gekennzeichnet, dass das Bauelement vom Typ C durch zwei Bauelemente vom Typ A gebildet werden, deren Sende- und Empfangsregister mit Hilfe eines programmierten logischen Elementes gekoppelt sind.

## Claims

1. A telephone switching system, comprising, among other things, switching means designed to switch message information by interconnecting access circuits for the calling and the called subscribers to which are assigned programmed-logic units called access units, switch control means for controlling in dependency on the control information the switchings to be effected by switching means, and at least one loop circuit for transmitting various management data to the said access units and to the said switch control means characterized in that the switching means are constituted by a switching network and the switch control means by a marker circuit of the said network, whilst the control data are elaborated on the basis of a first exchange of management data by means of a first loop circuit between a subscriber translating circuit and circuits connected to this first loop circuit and the access unit assigned to the access circuit of a calling subscriber and a second exchange of management data by means of a second loop circuit between a subscriber translating circuit and circuits connected to the second loop circuit and the access unit of a called subscriber.

2. A telephone switching system as claimed in Claim 1, characterized in that the first loop circuit merges with the second loop circuit.

3. A telephone switching system as claimed in Claim 2, characterized in that the loop circuits are arranged to have local loop circuits combined with a transmit loop circuit, whilst the switch control circuit is a marker circuit inserted into the transmit loop circuit and a subscriber translating circuit is inserted in each of the local loop circuits.

4. A telephone switching system as claimed in Claim 3, characterized in that a bundle translator, a routing translator and a metering translator are inserted in the transmit loop.

5. A telephone switching system as claimed in Claim 3, characterized in that the subscriber translating circuit forms a path of an access circuit controlled by the same programmed-logic unit.

6. A telephone switching system as claimed in one of the Claims 1 to 5, characterized in that the management data are constituted by frames of binary control digits, a called-subscriber address code, a calling-subscriber address code, an order code and more specific codes.

7. A telephone switching system as claimed in one of the Claims 1 to 6, for which the loops incorporate boxes of type A for the synchronization and generation of the time intervals for blocks of management data, boxes of type B for inserting blocks and extracting blocks from the loop and boxes of type C for branching functions between two loops, characterized in that the box of type A incorporates means for releasing a block which has passed through box A "n times" while it has been busy.

8. A telephone switching system as claimed in one of the Claims 1 to 6, for which the loops incorporate boxes of type A for the synchronization and generation of the time intervals for blocks of management data, boxes of type B for inserting blocks in and extracting blocks from the loop and boxes of type C for branching functions between two loops, characterized in that the box of type B incorporates receive registers for recording a received block of management data and transmission registers for containing a block of management data to be transmitted and a logic unit for signalling to the programmed-logic unit to which box B is connected that the received block of management data is intended for it and for transmitting in a free block the block contained in the transmission register loaded by the said programmed-logic unit.

9. A telephone switching system as claimed in one of the Claims 1 to 6, for which the loops incorporate boxes of type A for the synchronization and generation of time intervals for management data blocks, boxes of type B for the inserting blocks in and extracting blocks from the loop and boxes of type C for branching functions between two loops, characterized in that the box of type C is formed by two boxes A whose transmission registers and receive registers are coupled by means of a programmed-logic unit.

FIG.2

FIG.1

FIG.3

FIG.4

FIG.5

0 114 433

A

FIG.6

FIG.9

4

FIG.7

COAX 311

B

375

RE

SEL

420

RC

358 BI

FITR'

HR' 354

401

SFE 410

SMP 411

MMR 412

AIG

390 391 392 393 394

380 381 382 383 384

425 422

352

COAX 310

315 81 µP

5

FIG.8

FIG.10